(19) Europäisches Patentamt
European Patent Office
Office européen des brevets

(11) **EP 4 246 377 A1**

(12) **EUROPEAN PATENT APPLICATION**

(43) Date of publication:
**20.09.2023 Bulletin 2023/38**

(21) Application number: **22188541.1**

(22) Date of filing: **03.08.2022**

(51) International Patent Classification (IPC):
**G06N 3/0455** *(2023.01)*

(52) Cooperative Patent Classification (CPC):
**G06N 3/0455; G06N 3/0464; G06N 3/0475;**
**G06V 10/82**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **16.03.2022 KR 20220032768**

(71) Applicants:
• **Samsung SDS Co., Ltd.**
**Seoul 05510 (KR)**
• **Chung Ang University Industry Academic**
**Cooperation Foundation**
**Seoul 06974 (KR)**

(72) Inventors:
• **Kim, Do-Yeon**
**Seoul (KR)**
• **Choi, Jong Won**
**Seoul (KR)**
• **Jeong, Yong-Hyun**
**Seoul (KR)**
• **Ro, Young Min**
**Seoul (KR)**
• **Kim, Pyoung-Geon**
**Seoul (KR)**

(74) Representative: **Grünecker Patent- und**
**Rechtsanwälte**
**PartG mbB**
**Leopoldstraße 4**
**80802 München (DE)**

(54) **METHOD AND APPARATUS FOR TRAINING FAKE IMAGE DISCRIMINATIVE MODEL**

(57)     There are disclosed a method and apparatus for training a fake image discriminative model. The method for training a fake image discriminative model according to an embodiment includes generating one or more fake images for a real image by selecting one or more encoding layers and one or more decoding layers from a generator network of an autoencoder structure, generating a training image set based on the one or more fake images, and training a classifier for discriminating a fake image by using the training image set.

FIG. 1

**Description**

BACKGROUND

**1. Field**

The following description relates to a fake image discriminative technology.

**2. Description of Related Art**

Deep fake detection models in the related art are highly dependent on the learning environment, and as a consequence, have a 'generalization problem' in which the detection rate is greatly reduced when a test is performed with data that has not been learned. In order to solve the above-mentioned problem, it is necessary to learn by diversifying the model used to generate a fake image (e.g., a generative adversarial network (GAN)), the object category included in the training image, the type of image manipulation, and the like, so as to reduce data dependence and prevent the detection rate of the model from being decreased. However, it is likely that it takes a lot of time and cost. In addition, additional training has to be performed whenever a new fake image generation model and object category appear, which also takes a lot of time and cost.

Therefore, in order to reduce the resources, solving the generalization problem of the model by reducing the dependence on the training data and increasing the general detection performance is considered to be an important thing, but the problem has not been easily solved so far.

Examples of the related art include Korean Patent Laid-Open Publication No. 10-2021-0048187 (published May 3, 2021).

**SUMMARY**

The disclosed embodiments are intended to provide a method and apparatus for training a fake image discriminative model.

In one general aspect, there is provided a method for training a fake image discriminative model, the method including: generating one or more fake images for a real image by selecting one or more encoding layers and one or more decoding layers from a generator network of an autoencoder structure; generating a training image set based on the one or more fake images; and training a classifier for discriminating a fake image by using the training image set.

The training image set may include the one or more fake images.

The generating of the one or more fake images may include generating the one or more fake images by arbitrarily selecting the one or more encoding layers and the one or more decoding layers whenever each of the one or more fake images is generated.

The generating of the one or more fake images may include generating the one or more fake images by sequentially selecting one or more encoding layers from an input layer from among a plurality of encoding layers included in the autoencoder, and selecting one or more decoding layers symmetric to the one or more selected encoding layers from among a plurality of decoding layers included in the autoencoder.

The generating of the one or more fake images may include generating the one or more fake images by performing anti-aliasing on an output of at least one of the one or more decoding layers.

The generating of the training image set may include generating one or more synthetic images by using the one or more fake images, and the training image set may include the one or more synthetic images.

The generating of the one or more fake images may include generating a plurality of fake images for the real image, and the one or more synthetic images may include an image generated by combining two or more fake images among the plurality of fake images.

The one or more synthetic images may include an image generated by combining at least one of the one or more fake images with another real image.

The training image set may further include a real image generated by combining the real image and another real image.

The training may include training the classifier to classify the one or more synthetic images as fake and classify the real image generated by the combining as real.

In another general aspect, there is provided an apparatus for training a fake image discriminative model, the apparatus including: a fake image generator configured to generate one or more fake images for a real image by selecting one or more encoding layers and one or more decoding layers from a generator network of an autoencoder structure; a training image set generator configured to generate a training image set based on the one or more fake images; and a trainer configured to train a classifier for discriminating a fake image by using the training image set.

The training image set may include the one or more fake images.

The fake image generator may be configured to generate the one or more fake images by arbitrarily selecting the one or more encoding layers and the one or more decoding layers whenever each of the one or more fake images is generated.

The fake image generator may be configured to generate the one or more fake images by sequentially selecting one or more encoding layers from an input layer from among a plurality of encoding layers included in the auto encoder, and selecting one or more decoding layers symmetric to the one or more selected encoding layers from among a plurality of decoding layers included in the autoencoder.

The fake image generator may be configured to generate the one or more fake images by performing anti-aliasing on an output of at least one of the one or more decoding layers.

The fake image generator may be configured to generate one or more synthetic images by using the one or more fake images, and the training image set may include the one or more synthetic images.

The fake image generator may be configured to generate a plurality of fake images for the real image, and the one or more synthetic images may include an image generated by combining two or more fake images among the plurality of fake images.

The one or more synthetic images may include an image generated by combining at least one of the one or more fake images with another real image.

The training image set may further include a real image generated by combining the real image and another real image.

The trainer may be configured to train the classifier to classify the one or more synthetic images as fake and classify the real image generated by the combining as real.

## BRIEF DESCRIPTION OF THE DRAWINGS

FIG. 1 is a block diagram of an apparatus for training a language model according to an embodiment.

FIG. 2 is a diagram illustrating a configuration of a generator network according to an embodiment.

FIGS. 3 to 5 are diagrams for exemplarily describing selection of an encoding layer and a decoding layer and generation of a fake image according to an embodiment.

FIG. 6 is a diagram for exemplarily describing generation of a fake image using anti-aliasing according to an embodiment.

FIG. 7 is a flowchart of a method for training a fake image discriminative model according to an embodiment.

FIG. 8 is a block diagram for exemplarily describing a computing environment including a computing device according to an embodiment.

## DETAILED DESCRIPTION

Hereinafter, specific embodiments of the present disclosure will be described with reference to the accompanying drawings. The following detailed description is provided to assist in a comprehensive understanding of the methods, devices and/or systems described herein. However, the detailed description is only for illustrative purposes and the present disclosure is not limited thereto.

In describing the embodiments of the present disclosure, when it is determined that detailed descriptions of known technology related to the present disclosure may unnecessarily obscure the gist of the present disclosure, the detailed descriptions thereof will be omitted. The terms used below are defined in consideration of functions in the present disclosure, but may be changed depending on the customary practice or the intention of a user or operator. Thus, the definitions should be determined based on the overall content of the present specification. The terms used herein are only for describing the embodiments of the present disclosure, and should not be construed as limitative. Unless expressly used otherwise, a singular form includes a plural form. In the present description, the terms "including", "comprising", "having", and the like are used to indicate certain characteristics, numbers, steps, operations, elements, and a portion or combination thereof, but should not be interpreted to preclude one or more other characteristics, numbers, steps, operations, elements, and a portion or combination thereof.

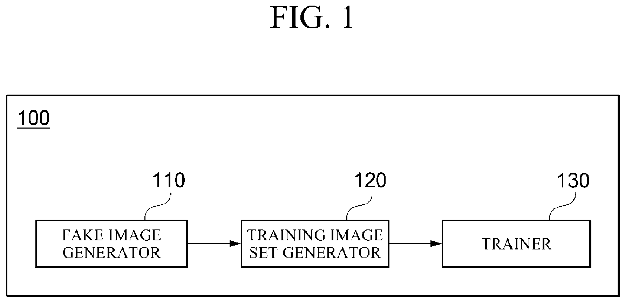

FIG. 1 is a block diagram of an apparatus for training a language model according to an embodiment.

Referring to FIG. 1, an apparatus for training a fake image discriminative model (hereinafter, referred to as a learning apparatus) 100 according to an embodiment includes a fake image generator 110, a training image set generator 120, and a trainer 130.

According to an embodiment, the fake image generator 110, the training image set generator 120, and the trainer 130 may be implemented by one or more hardware processors or a combination of one or more hardware processors and software, and may not be clearly distinguished in specific operations, unlike the illustrated example.

The fake image generator 110 generates one or more fake images for a real image by selecting one or more encoding layers and one or more decoding layers from a generator network of an autoencoder structure.

According to an embodiment, the autoencoder may be an artificial neural network based on a convolutional neural network (CNN) including an encoder composed of a plurality of encoding layers and compressing an input image into a low-dimensional representation vector and a decoder composed of a plurality of decoding layers and decompressing the representation vector generated by the encoder and generating a fake image for the input image.

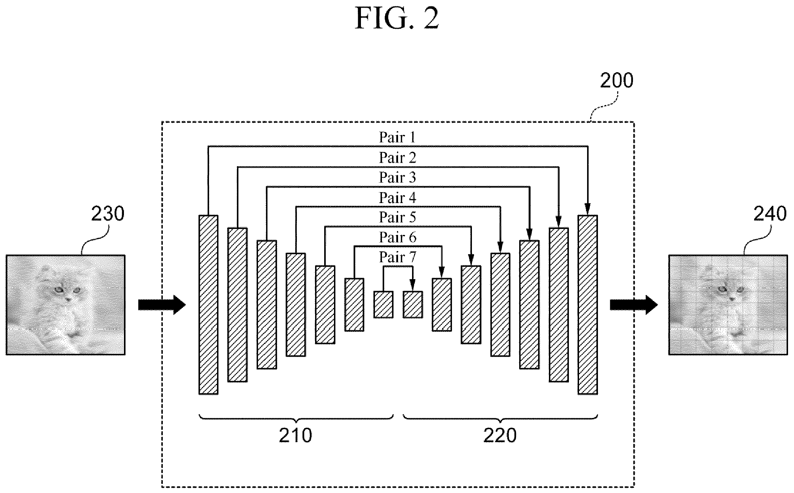

Specifically, FIG. 2 is a diagram illustrating a configuration of a generator network according to an embodiment.

Referring to FIG. 2, the generator network 200 may include an encoder 210 consisting of seven encoding layers and a decoder 220 consisting of seven decoding layers, each symmetric to one of the seven encoding layers. Meanwhile, in the example shown in FIG. 2, the number of encoding layers and decoding layers is exemplary and may be changed depending on the embodiment.

The encoder 210 may generate an expression vector by compressing an input image 230 to a lower dimension stepwise. In addition, the decoder 220 may generate the fake image 240 by reconstructing the input image 230 by decompressing the expression vector generated by the encoder 210 to a higher dimension stepwise.

Specifically, the first encoding layer of the seven encoding layers may perform a convolution operation and then perform down-sampling through, for example, a pooling operation such as max pooling, on the input image 230, and output the resulting image. In addition, the second and each subsequent encoding layer may perform a convolution operation on the output of the previous encoding layer and then perform down-sampling through the pooling operation, and output the resulting image.

Further, in the seven decoding layers, the first decoding layer may perform the convolution operation on the expression vector generated by the encoder 210 and then perform up-sampling, and output the resulting image. In addition, the second and each subsequent decoding layer may perform a convolution operation on the output of the previous decoding layer and then perform up-sampling, and output the resulting image. Accordingly, the fake image 240 generated by the decoder 220 includes lattice-shaped artifacts caused by up-sampling performed in the decoding layer.

Meanwhile, a decoding layer that is symmetric to a specific encoding layer in the plurality of encoding layers may mean a decoding layer that receives a vector having the same dimension as an output vector output by the corresponding specific encoding layer. Specifically, as in the illustrated example, the first encoding layer may form a symmetric pair with the last decoding layer (that is, pair 1), and the second encoding layer may form a symmetric pair with the sixth decoding layer (that is, pair 2). In this way, the generator network 200 may be made up of seven symmetric pairs (that is, pair 1 to pair 7) each including an encoding layer and a decoding layer.

Referring back to FIG. 1, the fake image generator 110 may generate one or more fake images from a real image input to the generator network by using the generator network, and may arbitrarily select one or more encoding layers and one or more decoding layers whenever a fake image is generated.

Specifically, according to an embodiment, the fake image generator 110 may select one or more encoding layers sequentially from a first encoding layer from among a plurality of encoding layers included in the encoder, and may select one or more decoding layers that are symmetric to the one or more selected encoding layers from among a plurality of decoding layers included in the decoder. Further, the fake image generator 110 may generate a fake image from the real image by using one or more selected encoding layers and one or more decoding layers.

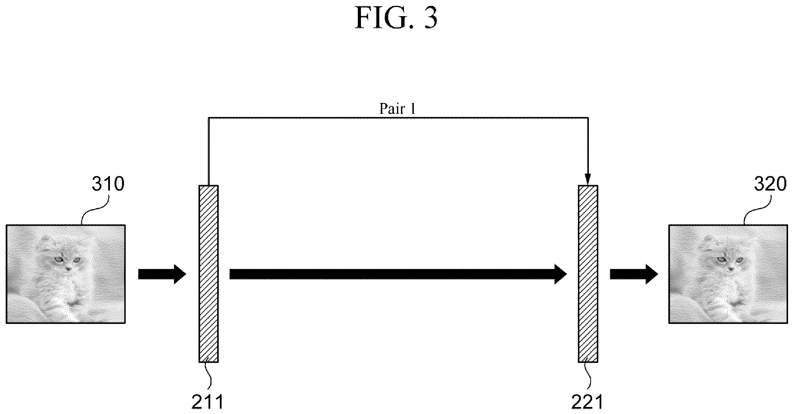

FIGS. 3 to 5 are diagrams for exemplarily describing selection of an encoding layer and a decoding layer and generation of a fake image according to an embodiment.

Referring to FIGS. 2 to 5, the fake image generator 110 may select the first encoding layer 211 of the encoder 210 and the last decoding layer 221 of the decoder 220 (that is, pair 1) as in the example shown in FIG. 3, and may generate a fake image 320 for a real image 310 by using the selected encoding layer 211 and decoding layer 221.

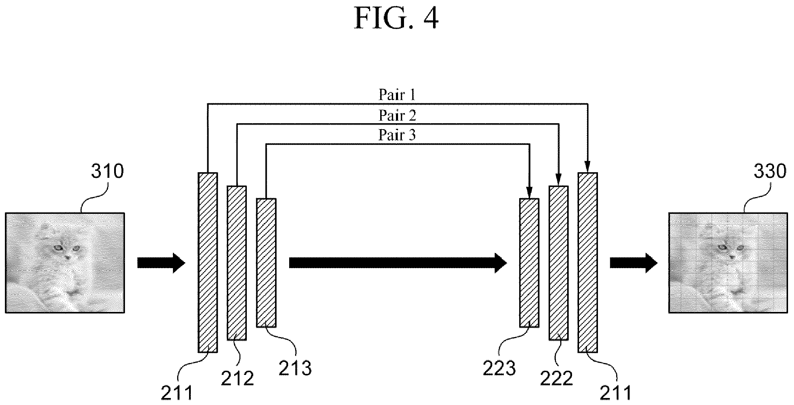

Furthermore, the fake image generator 110 may select the first to third encoding layers 211, 212, and 213 of the encoder 210 and the fifth to last decoding layers 221, 222, and 223 of the decoder 220 (that is, pair 1, pair 2, and pair 3) as in the example shown in FIG. 4, and may generate a fake image 330 for the real image 310 by using the selected encoding layers 211, 212, and 213 and the decoding layers 221, 222, and 223.

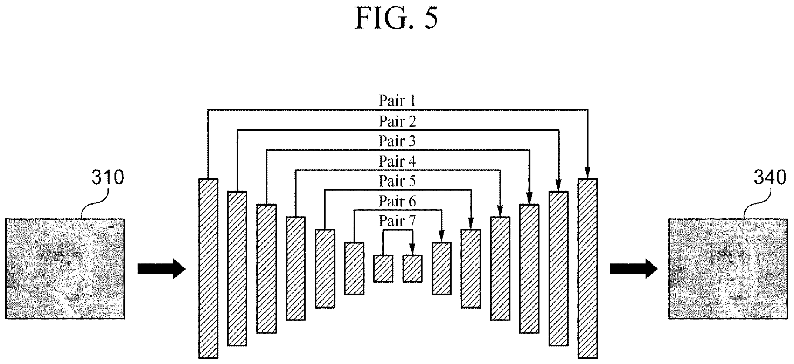

Further, as in the example shown in FIG. 5, the fake image generator 110 may use the entire encoding layer of the encoder 210 and the entire decoding layer of the decoder 220 to generate a fake image 340 for the real image 310.

Meanwhile, in the examples shown in FIGS. 3 to 5, the number of times of up-sampling performed to generate the fake images 320, 330, and 340 is different depending on the number of the selected decoding layers, and accordingly, the fake images 320, 330, and 340 each may include different types of artifacts. That is, the fake image generator 110 may arbitrarily select an encoding layer and a decoding layer for generating a fake image, thereby generating various fake images 320, 330, and 340, each including a different type of artifact, from the same real image 310.

Referring back to FIG. 1, according to an embodiment, the fake image generator 110 may generate a fake image by performing anti-aliasing on the output of at least one of the one or more decoding layers selected for generating the fake image.

In this case, anti-aliasing may be performed using, for example, a blur filter, interpolation, or the like; however, in addition to the above-described examples, anti-aliasing may be performed through various methods that may reduce artifacts included in the image, and is not necessarily limited in a particular way.

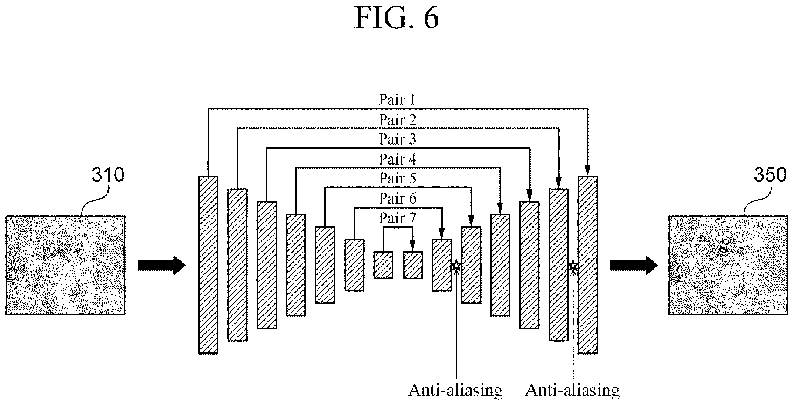

Specifically, FIG. 6 is a diagram for exemplarily describing generation of a fake image using anti-aliasing according to an embodiment.

As in the example shown in FIG. 6, the fake image generator 110 may generate a fake image 350 for the real image 310 by performing anti-aliasing on outputs of the second decoding layer and the sixth decoding layer of the decoder 220. In this case, the generated fake image 350 includes a relatively low density of artifacts as compared to the fake image 340 illustrated in FIG. 5, by anti-aliasing.

Meanwhile, a decoding layer on which anti-aliasing is to be performed among a plurality of decoding layers included in the decoder 220 may be arbitrarily determined whenever a fake image is generated; this makes it possible for the fake image generator 110 to generate, from the same real image 310, various fake images 340 and 350, each including artifacts of the same shape, but including a different density of artifacts.

In addition, depending on the embodiment, selection of the encoding layer and the decoding layer and performing anti-aliasing may be simultaneously applied; this makes it possible for the fake image generator 110 to generate, from the same real image, a plurality of fake images that are different in at least one of the shape and the density of artifacts.

Referring back to FIG. 1, the training image set generator 120 generates a training image set based on one or more fake images generated by the fake image generator 110. In this case, the training image set means a set of images to be used for training a classifier, which will be described later.

According to an embodiment, the training image set may include a plurality of real images and a plurality of fake images. In this case, the plurality of fake images included in the training image set may include at least one of a fake image generated by the fake image generator 110 and a synthetic image to be described later.

Specifically, according to an embodiment, the training image set generator 120 may generate one or more synthetic images by using at least one of a plurality of fake images generated by the fake image generator 110.

As described above, the fake image generator 110 may generate, from the real image, a plurality of fake images that are different in at least one of the shape and density of artifacts. Accordingly, the training image set generator 120 may combine two or more fake images among the plurality of fake images generated from the same real image to generate a synthetic image, and may include the generated synthetic image in the training image set as a fake image.

In this case, the training image set generator 120 may generate a synthetic image F' based on Equation 1 below, for example.

[Equation 1]

$$\alpha F_1 + (1 - \alpha)F_2 = F'$$

In Equation 1, Fi and $F_2$ each represent a fake image generated from the same real image. In addition, $\alpha$ represents a weight having a value between 0 and 1, and may be preset or arbitrarily determined when a synthetic image is generated.

According to an embodiment, the training image set generator 120 may generate a synthetic image by combining at least one of the one or more fake images generated from the real image by the fake image generator 110 with another real image, and may include the generated synthetic image in the training image set as a fake image.

In this case, the training image set generator 120 may generate a synthetic image F" based on Equation 2 below, for example.

[Equation 2]

$$\beta F_1 + (1 - \beta)R = F''$$

In Equation 2, Fi represents a fake image, and R represents a real image different from the real image used to generate Fi. In addition, $\beta$ represents a weight having a value between 0 and 1, and may be preset or arbitrarily determined when a synthetic image is generated.

Meanwhile, according to an embodiment, the training image set generator 120 may generate one or more synthetic images by combining two or more real images, and may include the generated synthetic images in the training image set as real images.

In this case, the training image set generator 120 may generate a synthetic image R' based on Equation 3 below, for example.

[Equation 3]

$$\gamma R_1 + (1 - \gamma)R_2 = R'$$

In Equation 3, Ri and $R_2$ each represent a real image. In addition, $\gamma$ represents a weight having a value between 0 and 1, and may be preset or arbitrarily determined when a synthetic image is generated.

Meanwhile, the trainer 130 trains a classifier for discriminating a fake image by using the training image set generated by the training image set generator 120.

According to an embodiment, the training image set may include a plurality of real images and a plurality of fake images. In this case, the plurality of fake images may include at least one of a fake image generated by the fake image generator 110 and a fake image synthesized by the training image set generator 120. Further, the plurality of real images may include real images synthesized by the training image set generator 120.

The classifier may be, for example, an artificial neural network-based binary classifier such as CNN, but if the classifier may be trained to output a discriminant value for whether the image input to the classifier is a real image or a fake image, it is not necessarily limited to a specific type of classifier.

Meanwhile, the trainer 130 may train the classifier to, when a real image is input among the images included in the training image set, output a discriminant value (e.g., 0) indicating that the input image is the real image, and when a fake image is input among the images included in the training image set, output a discriminant value (e.g., 1) indicating that the input image is the fake image.

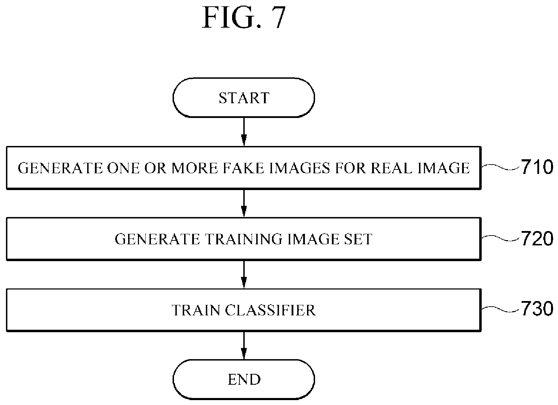

FIG. 7 is a flowchart of a method for training a fake image discriminative model according to an embodiment.

The method illustrated in FIG. 7 may be performed by, for example, the learning apparatus 100 illustrated in FIG. 1.

Referring to FIG. 7, the learning apparatus 100 selects one or more encoding layers and one or more decoding layers from a generator network of an autoencoder structure to generate one or more fake images for a real image (710).

In this case, according to an embodiment, the learning apparatus 100 may generate one or more fake images by arbitrarily selecting one or more encoding layers sequentially from a first layer from among a plurality of encoding layers included in the autoencoder, and selecting one or more decoding layers that are symmetric to the one or more selected encoding layers from among a plurality of decoding layers included in the auto-decoder.

Further, according to an embodiment, the learning apparatus 100 may generate one or more fake images by performing anti-aliasing on the output of at least one of the one or more decoding layers.

Then, the learning apparatus 100 generates a training image set based on the one or more generated fake images (720).

According to an embodiment, the learning apparatus 100 may generate one or more synthetic images by using at least one of the one or more fake images generated in step 710, and the synthetic images generated through this may be included in the training image set as fake images. In this case, the synthetic image may include an image generated by combining two or more fake images among the fake images generated in step 710 and an image generated by combining at least one of the fake images generated in step 710 with the real image.

Further, according to an embodiment, the learning apparatus 100 may generate a synthetic image by combining two different real images, and the resulting synthetic image may be included in the training image set as a real image.

Then, the learning apparatus 100 trains a classifier for discriminating a fake image by using the generated training image set (730).

According to an embodiment, the learning apparatus 100 may train the classifier to classify a fake image among images included in the training image set as fake and classify a real image among images included in the training image set as real.

Meanwhile, in the flowchart illustrated in FIG. 7, at least some of the steps may be performed in a different order, performed together in combination with other steps, omitted, performed in subdivided steps, or performed by adding one or more steps not illustrated.

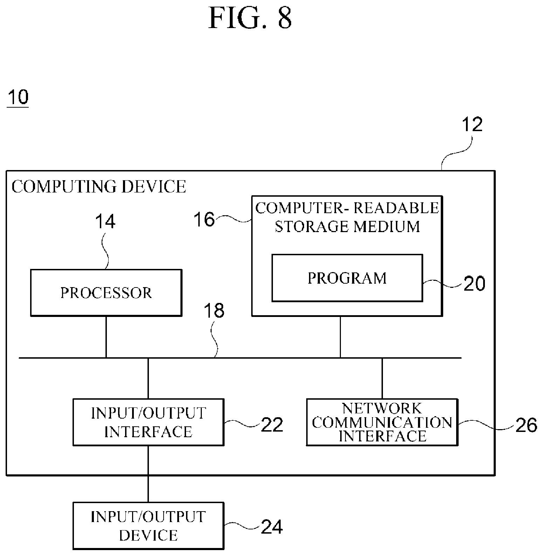

FIG. 8 is a block diagram for exemplarily describing a computing environment including a computing device according to an embodiment. In the illustrated embodiment, each component may have different functions and capabilities in addition to those described below, and additional components may be included in addition to those described below.

The illustrated computing environment 10 includes a computing device 12. The computing device 12 may be one or more components included in the learning apparatus 100 according to an embodiment.

The computing device 12 includes at least one processor 14, a computer-readable storage medium 16, and a communication bus 18. The processor 14 may cause the computing device 12 to operate according to the above-described exemplary embodiments. For example, the processor 14 may execute one or more programs stored in the computer-readable storage medium 16. The one or more programs may include one or more computer-executable instructions, which may be configured to cause, when executed by the processor 14, the computing device 12 to perform operations according to the exemplary embodiments.

The computer-readable storage medium 16 is configured to store computer-executable instructions or program codes, program data, and/or other suitable forms of information. A program 20 stored in the computer-readable storage medium 16 includes a set of instructions executable by the processor 14. In an embodiment, the computer-readable storage medium 16 may be a memory (a volatile memory such as a random-access memory, a non-volatile memory, or any suitable combination thereof), one or more magnetic disk storage devices, optical disc storage devices, flash memory devices, other types of storage media that are accessible by the computing device 12 and may store desired information, or any suitable combination thereof.

The communication bus 18 interconnects various other components of the computing device 12, including the processor 14 and the computer-readable storage medium 16.

The computing device 12 may also include one or more input/output interfaces 22 that provide an interface for one or more input/output devices 24, and one or more network communication interfaces 26. The input/output interface 22 and the network communication interface 26 are connected to the communication bus 18. The input/output device 24 may be connected to other components of the computing device 12 via the input/output interface 22. The exemplary input/output device 24 may include a pointing device (a mouse, a trackpad, or the like), a keyboard, a touch input device (a touch pad, a touch screen, or the like), a voice or sound input device, input devices such as various types of sensor devices and/or imaging devices, and/or output devices such as a display device, a printer, an interlocutor, and/or a network card. The exemplary input/output device 24 may be included inside the computing device 12 as a component constituting the computing device 12, or may be connected to the computing device 12 as a separate device distinct from the computing device 12.

According to the embodiments disclosed herein, it is possible to reduce dependence on the learning environment and training data by generating various types of fake images and using the generated fake images for training the detection model, thereby making it possible to solve the generalization problem in the related art.

Although the present disclosure has been described in detail through the representative embodiments as above, those skilled in the art will understand that various modifications can be made thereto without departing from the scope of the present disclosure. Therefore, the scope of rights of the present disclosure should not be limited to the described embodiments, but should be defined not only by the claims set forth below but also by equivalents of the claims.

**Claims**

1.  A method for training a fake image discriminative model, the method comprising:

    generating one or more fake images for a real image by selecting one or more encoding layers and one or more decoding layers from a generator network of an autoencoder structure;
    generating a training image set based on the one or more fake images; and
    training a classifier for discriminating a fake image by using the training image set.

2.  The method of claim 1, wherein the training image set includes the one or more fake images.

3.  The method of claim 1 or 2, wherein the generating of the one or more fake images includes generating the one or more fake images by arbitrarily selecting the one or more encoding layers and the one or more decoding layers whenever each of the one or more fake images is generated.

4.  The method of one of claims 1 to 3, wherein the generating of the one or more fake images includes generating the one or more fake images by sequentially selecting one or more encoding layers from an input layer from among a plurality of encoding layers included in the autoencoder, and selecting one or more decoding layers symmetric to the one or more selected encoding layers from among a plurality of decoding layers included in the autoencoder.

5.  The method of one of claims 1 to 4, wherein the generating of the one or more fake images includes generating the one or more fake images by performing anti-aliasing on an output of at least one of the one or more decoding layers.

6.  The method of one of claims 1 to 5, wherein the generating of the training image set includes generating one or more synthetic images by using the one or more fake images, and
    the training image set includes the one or more synthetic images.

7.  The method of claim 6, wherein the generating of the one or more fake images includes generating a plurality of fake images for the real image, and

the one or more synthetic images include an image generated by combining two or more fake images among the plurality of fake images.

8.  The method of claim 6, wherein the one or more synthetic images include an image generated by combining at least one of the one or more fake images with another real image.

9.  The method of claim 6, wherein the training image set further includes a real image generated by combining the real image and another real image.

10. The method of claim 9, wherein the training includes training the classifier to classify the one or more synthetic images as fake and classify the real image generated by the combining as real.

11. An apparatus for training a fake image discriminative model, the apparatus comprising:

a fake image generator configured to generate one or more fake images for a real image by selecting one or more encoding layers and one or more decoding layers from a generator network of an autoencoder structure;
a training image set generator configured to generate a training image set based on the one or more fake images; and
a trainer configured to train a classifier for discriminating a fake image by using the training image set.

12. The apparatus of claim 11, wherein the fake image generator is configured to generate the one or more fake images by arbitrarily selecting the one or more encoding layers and the one or more decoding layers whenever each of the one or more fake images is generated.

13. The apparatus of claim 11 or 12, wherein the fake image generator is configured to generate the one or more fake images by sequentially selecting one or more encoding layers from an input layer from among a plurality of encoding layers included in the autoencoder, and selecting one or more decoding layers symmetric to the one or more selected encoding layers from among a plurality of decoding layers included in the autoencoder.

14. The apparatus of one of claims 11 to 13, wherein the fake image generator is configured to generate the one or more fake images by performing anti-aliasing on an output of at least one of the one or more decoding layers.

15. The apparatus of one of claims 11 to 14, wherein the fake image generator is configured to generate one or more synthetic images by using the one or more fake images, and the training image set includes the one or more synthetic images.

# FIG. 1

# FIG. 2

Pair 1
Pair 2
Pair 3
Pair 4
Pair 5
Pair 6
Pair 7

200

230

240

210

220

# FIG. 3

# FIG. 4

# FIG. 5

310

340

Pair 1
Pair 2
Pair 3
Pair 4
Pair 5
Pair 6
Pair 7

# FIG. 6

310

Pair 1
Pair 2
Pair 3
Pair 4
Pair 5
Pair 6
Pair 7

350

Anti-aliasing    Anti-aliasing

# FIG. 7

START

↓

GENERATE ONE OR MORE FAKE IMAGES FOR REAL IMAGE — 710

↓

GENERATE TRAINING IMAGE SET — 720

↓

TRAIN CLASSIFIER — 730

↓

END

# FIG. 8

<u>10</u>

Europäisches
Patentamt

European
Patent Office

Office européen
des brevets

## EUROPEAN SEARCH REPORT

Application Number

EP 22 18 8541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JEONG YONGHYUN ET AL: "FingerprintNet: Synthesized Fingerprints for Generated Image Detection", 12 November 2021 (2021-11-12), SPRINGER INTERNATIONAL PUBLISHING, PAGE(S) 76 - 94, XP047637443, * abstract * * figure 1 * * Sections 3.1 and 3.2; page third - page fourth * | 1-15 | INV. G06N3/0455 |
| X | YONGHYUN JEONG ET AL: "Self-supervised GAN Detector", ARXIV.ORG, CORNELL UNIVERSITY LIBRARY, 201 OLIN LIBRARY CORNELL UNIVERSITY ITHACA, NY 14853, 12 November 2021 (2021-11-12), XP091098381, * abstract; figure 2 * * Section 3.1; page 80 * * Section 3.3; page 81 * * Sections 4.2 and 4.3; page 84 * | 1-15 | |

TECHNICAL FIELDS
SEARCHED      (IPC)

G06N
G06V

The present search report has been drawn up for all claims

| Place of search | Date of completion of the search | Examiner |
|---|---|---|
| The Hague | 4 May 2023 | Fonseca dos Santos |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

**REFERENCES CITED IN THE DESCRIPTION**

**Patent documents cited in the description**

- KR 1020210048187